# FASCICULE DE BREVET EUROPEEN

(11) **EP 0 645 870 B1**
(45) Date de publication et mention de la délivrance du brevet: **22.05.2002**
(21) Numéro de dépôt: 94420258.9
(22) Date de dépôt: 26.09.1994
(51) Int. Cl.: H02J 13/00

(54) **Procédé et circuit de transmission d'informations issues de capteurs sur un fil conducteur électrique**
Verfahren und Schaltung zur Informationsübertragung von Sensoren durch einen elektrischen Leiter
Method and circuit for the transmission of information from sensors through an electrical conductor

(30) Priorité: 24.09.1993 FR 9311625
(43) Date de publication de la demande: 29.03.1995
(73) Titulaire: SEB S.A., 69130 Ecully (FR)
(72) Inventeur: Cubizolles, Serge, F-69007 Lyon (FR); Giovalle,Christian, F-38440 Moidieu-Detourbe (FR)

(56) Documents cités:
- EP-A- 0 038 877
- WO-A-93/18568
- FR-A- 2 550 356
- GB-A- 2 065 425
- US-A- 4 329 678

## Description

La présente invention se rapporte au domaine de la transmission d'informations par un fil électrique, et plus particulièrement au secteur des appareils électriques, du type électroménager par exemple, lesquels sont associés à des unités de régulation ou de commande séparées. Ces dernières sont reliées aux appareils électriques par un fil conducteur électrique de transmission pour transmettre diverses informations à l'unité de commande ou de régulation, notamment des informations concernant des grandeurs physiques mesurées par des capteurs.

Il est connu dans l'art antérieur, notamment pour le chauffage électrique, de transmettre des informations sur un seul fil en différenciant les informations par l'envoi d'alternances électriques positives, négatives ou une combinaison d'alternances positives et négatives.

Le document FR-A-2 550 356 décrit un procédé de transmission d'informations selon le préambule de la revendication 1.

L'inconvénient que présente une telle transmission résulte des problèmes que l'on rencontre au niveau de la réception des informations pour analyser le sens positif et négatif des alternances électriques. Ainsi, le nombre d'informations pouvant être transmises de manière satisfaisante est, en général, inférieur à quatre, ce qui présente un désavantage supplémentaire.

L'objet de la présente invention vise à fournir un procédé de transmission d'informations issues de capteurs de grandeurs physiques présents en nombre plus ou moins important, vers un appareil électrique.
Un autre objet de la présente invention consiste à utiliser un circuit électrique ou électronique simple pour transformer un signal électrique de manière à ce que ledit signal électrique transporte des informations issues des capteurs mesurant des grandeurs physiques et sensibles par exemple à l'état de fonctionnement et/ou d'utilisation d'un appareil électrique.

Les buts assignés à la présente invention sont atteints à l'aide d'un procédé de transmission d'informations comportant les caractéristiques décrites à la revendication 1.

Les buts assignés à l'invention sont atteints à l'aide d'un circuit électronique ou électrique de transmission comportant les caractéristiques de la revendication 5.

D'autres particularités et avantages ressortiront mieux à la lecture de la description donnée ci-après, en référence aux dessins annexés, donnés à titre d'exemples non limitatifs dans lesquels :
- la figure 1 représente un exemple de réalisation et de montage d'un circuit électronique, relié au fil de transmission et conforme à l'invention,
- la figure 2 représente le signal électrique sinusoïdal fourni par le secteur,
- la figure 3a représente une alternance positive et négative du signal électrique du secteur,
- la figure 3b représente une alternance positive tronquée temporellement et qui correspond à un ensemble d'informations,
- la figure 3c représente une alternance positive tronquée temporellement et qui correspond à un autre ensemble d'informations.

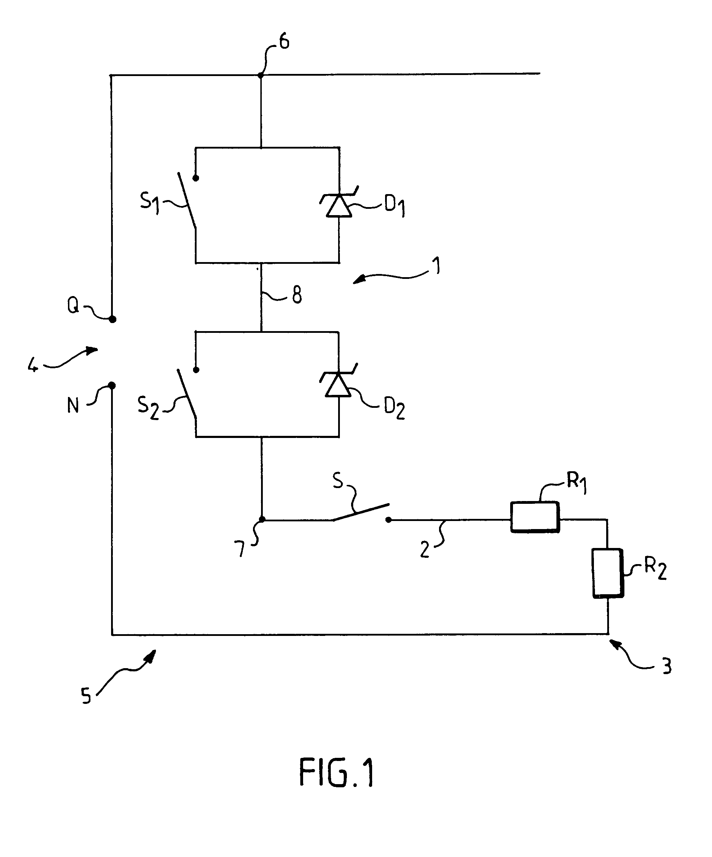

La figure 1 représente un schéma électrique d'un montage 5 des différents moyens permettant de transmettre des informations.

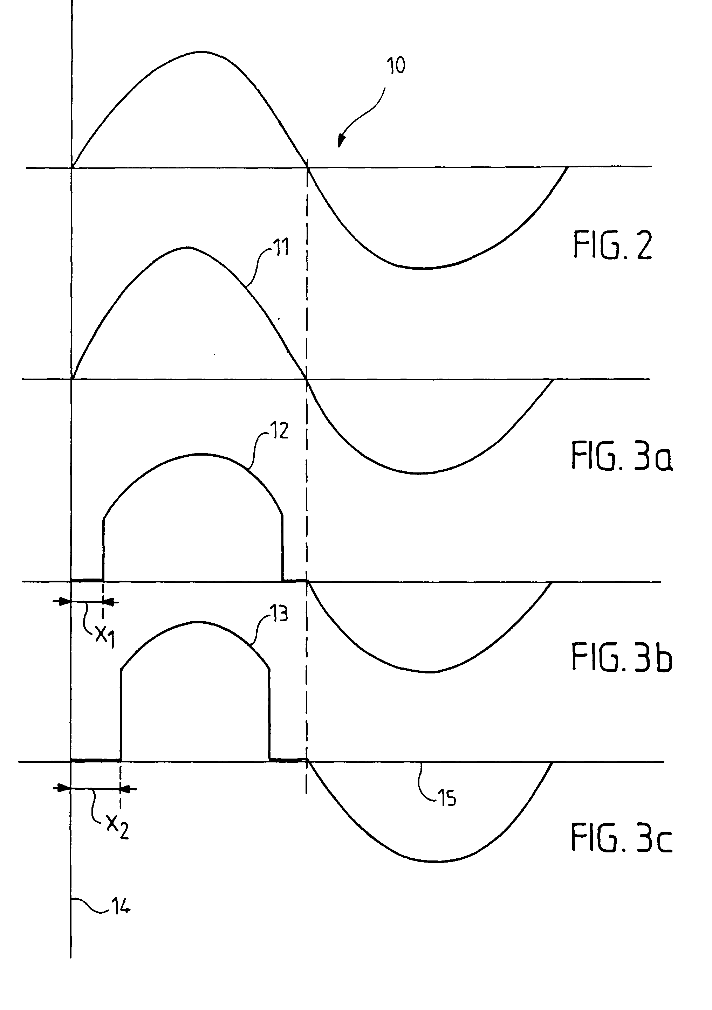

Le montage 5 comprend une alimentation électrique 4 comportant une borne P et une borne N, fournissant un signal électrique 10 représenté par exemple à la figure 2, un circuit électronique 1, un interrupteur global S, un fil de transmission 2 ainsi qu'un diviseur de tension 3.

Le circuit électronique 1 comporte deux capteurs de grandeurs physiques, du type tout ou rien par exemple, non représentés aux figures, dont l'un est associé à un interrupteur S1 et l'autre à un interrupteur S2.

L'interrupteur S1 est branché en parallèle avec un premier moyen d'écrêtage temporel du signal électrique 10 représenté à la figure 2 par exemple, et l'interrupteur S2 est branché en parallèle avec un deuxième moyen d'écrêtage temporel du signal électrique 10 représenté à la figure 2 par exemple.

Les moyens d'écrêtage temporel sont constitués par exemple de diodes zéner D1 et D2, présentant de préférence une tension zéner différente.

Chaque moyen d'écrêtage temporel en parallèle avec un interrupteur S1, S2, constitue ainsi un sous-ensemble d'écrêtage. Ce dernier est selon le cas, branché en série avec un ou plusieurs autres sous-ensembles d'écrêtage du même type.

Le circuit électronique 1 est branché, par un point de connexion 6, sur la borne P de l'alimentation électrique 4 et sur un interrupteur global S par un point de connexion 7.

Les points de connexion 6 et 7 correspondent aux extrémités du circuit électronique 1, lequel est constitué d'un assemblage en série d'un certain nombre de sous-ensembles d'écrêtage.

L'interrupteur global S permet de connecter ou de déconnecter le circuit électronique 1 avec le fil de transmission 2. Ce dernier est également relié à la borne N de l'alimentation électrique 4 à travers un diviseur de tension 3, lequel est constitué d'une résistance R1 et d'une résistance R2.

Le circuit électronique ou électrique 1 est ainsi relié électriquement par l'intermédiaire du fil de transmission 2 à des moyens de réception et d'analyse des informations transmises, de manière à optimiser le fonctionnement de l'appareil électrique, lesdits moyens de réception et d'analyse étant constitués notamment du diviseur de tension 3 sur lequel est transmis le signal électrique marqué de ou des informations issues des capteurs.

Il est évident que l'invention ne se limite pas à l'utilisation de deux capteurs de grandeurs physiques.

Avantageusement, l'alimentation électrique 4 est constituée par la phase et le neutre du secteur. Le circuit électronique 1 est ainsi alimenté par l'alimentation électrique 4 du secteur.

Ainsi, chaque interrupteur S1, S2 représentant un capteur de grandeurs physiques du type tout ou rien, pilotant l'interrupteur S1, S2, est associé à une diode zéner D1, D2 branchée en parallèle sur ledit interrupteur S1, S2 pour écrêter temporellement le signal électrique 10 avec l'ouverture dudit interrupteur S1, S2.

Le diviseur de tension 3 est utilisé parmi les moyens de réception et d'analyse pour lire par exemple sur la tension aux bornes de la résistance R2 ou pour déterminer les informations que contient un signal électrique transmis 11, 12 ou 13 représenté respectivement aux figures 3a, 3b ou 3c.

Le circuit électronique 1 est donc relié électriquement, par l'intermédiaire d'un fil de transmission 2, conducteur électrique, pour transmettre des informations issues de capteurs de grandeurs physiques, aux moyens de réception et d'analyse desdites informations, lesquelles sont véhiculées sur l'unique fil de transmission 2.

La figure 3a représente une alternance positive 11 du signal électrique 10. L'alternance positive 11 est transformée par le circuit électronique 1 pour véhiculer une ou plusieurs informations issues de capteurs. Ces derniers associés à des interrupteurs S1 et S2 fonctionnent selon un principe de tout ou rien. Ainsi lorsque l'interrupteur global S est ouvert, aucun signal électrique n'est détecté aux bornes de la résistance R2.

En revanche, lorsque l'interrupteur global S, ainsi que les interrupteurs S1 et S2 sont fermés, le signal électrique 10, non transformé, est transmis par le fil de transmission 2 vers le diviseur de tension 3.

En revanche, lorsque les interrupteurs S1 et S2 sont ouverts, ou l'un seulement des interrupteurs S1 et S2 est ouvert, l'alternance positive 11 est écrêtée temporellement pour un temps X1 ou X2 tels que représentés aux figures 3b et 3c.

Selon une variante de réalisation du circuit électronique 1, l'écrêtage peut être effectué sur l'alternance négative du signal électrique 10, à condition que les moyens de réception et d'analyse puissent transformer l'alternance négative du signal électrique 10 en alternance positive. Une telle caractéristique est indispensable pour mesurer un temps par l'intermédiaire d'un micro-contrôleur par exemple. Une quantité d'informations doubles peut alors être véhiculée par le fil de transmission 2.

L'ensemble des figures 2, 3a, 3b et 3c présente une référence en temps 14 ainsi qu'un axe des temps 15. La détermination de l'écrêtage temporel se fait à partir de la référence en temps 14.

Le temps X1 correspond à l'ouverture de l'interrupteur S1 et à la fermeture de l'interrupteur S2, ainsi qu'au temps de blocage de la diode zéner D1. En effet, la diode zéner D1 n'est passante qu'à partir d'une valeur de la tension appliquée sur ladite diode zéner D1, supérieure à la tension zéner correspondante.

La figure 3c représente l'écrêtage de l'alternance positive 11 par la diode zéner D2. Le signal électrique transmis 13 correspond donc à l'ouverture de l'interrupteur S2 et à la fermeture de l'interrupteur S1. Le temps X2 résulte du blocage de la diode zéner D2.

Ainsi, chaque information transmise par au moins un capteur correspond à un écrêtage d'une ampleur déterminée.

Préférentiellement, les moyens de réception et d'analyse permettent de détecter et/ou de mesurer un temps X1 ou X2 par une analyse temporelle d'un signal électrique et notamment par un micro-contrôleur ou microprocesseur, pouvant mesurer un temps de coupure dudit signal électrique 10.

Dans un autre cas de figure, l'interrupteur global S est fermé et les interrupteurs S1 et S2 sont tout deux ouverts. L'écrêtage temporel de l'alternance positive 11 est plus important car la tension zéner résultante est une somme des tensions zéner correspondant aux diodes zéner D1 et D2. Le temps de blocage du circuit électrique 1 est dans ce cas supérieur au temps X1 et au temps X2 pour représenter une information, différente de celles relatives au temps X1 et X2.

Chaque signal transmis véhicule ainsi une information sur l'état de chaque interrupteur S1, S2 et S et par conséquent sur l'état de chaque capteur.

Selon une variante de réalisation du circuit électronique 1, non représentée aux figures, ce dernier peut être complété d'au moins une branche de circuit, connectée soit entre les points de connexion 6 et 8, soit entre les points de connexion 8 et 7, soit entre les points de connexion 6 et 7, comportant un moyen d'écrêtage du type diode zéner branchée en série avec un interrupteur supplémentaire associé à un capteur. La tension seuil de blocage d'un tel moyen écrêteur peut avantageusement être choisie inférieure à au moins une tension zéner correspondant à la diode zéner D1 ou D2, de manière à constituer un capteur prioritaire.

Le circuit électronique ou électrique 1 associé au fil de transmission 2 d'informations est ainsi adapté pour la mise en oeuvre du procédé conforme à l'invention.

Le procédé consiste donc notamment à utiliser un signal alternatif sinusoïdal du secteur pour véhiculer de manière automatique les informations.

Le procédé, conforme à l'invention consiste également à différencier chaque information transmise par un écrêtage temporel distinct.

Par ailleurs, c'est l'alternance positive 11, du signal alternatif sinusoïdal du secteur, qui est utilisée pour véhiculer les informations.

La transmission d'informations relatives à divers états de fonctionnement d'un appareil électrique peut ainsi être envisagée, en continue et de manière automatique.

Selon une autre variante de réalisation du circuit électronique 1, ce dernier comporte des moyens écrêteurs présentant une tension de coupure variable linéairement en fonction de grandeurs physiques variables lues par un capteur. A ce titre, l'utilisation d'une cellule du type CTN est avantageuse. La variation de l'écrêtage peut correspondre par exemple à une variation de température, transmise sous forme d'information par le fil de transmission 2.

Selon une variante de réalisation du circuit électronique 1 conforme à l'invention, les diodes zéner sont remplacées par d'autres types d'écrêteurs et notamment des transils, des écrêteurs à gaz du type lampes néon, ou des varistances. Ainsi, le circuit électronique 1 peut, selon d'autres variantes de réalisation conformes à l'invention, être remplacé par un circuit électrique.

L'interrupteur S1 peut avantageusement être associé à un dispositif de détection de présence d'une partie du corps humain. Une telle réalisation est envisageable notamment pour des fers à repasser, reliés à des générateurs de vapeur.

Un avantage du procédé conforme à l'invention réside dans l'utilisation de moyens de détection et d'analyse gérant un temps de coupure plutôt qu'un seuil de tension sur un signal électrique, et procure de ce fait une simplicité accrue desdits moyens de détection ou d'analyse.

Un autre avantage est obtenu par l'agencement d'un nombre non limité de capteurs, les uns prioritaires ou non par rapport aux autres et par la transmission de l'information sur l'état de tous les capteurs par un unique fil de transmission 2.

Ainsi, des capteurs du type capteur de position, capteur de température, capteur de mouvement, ou capteur d'humidité peuvent être associés pour automatiser le fonctionnement d'un appareil électroménager. A titre d'exemple, une telle automatisation peut être réalisée dans un générateur de vapeur relié à un fer à repasser par l'intermédiaire d'un fil de transmission 2.

Un autre avantage du circuit électronique ou électrique 1 est obtenu par son alimentation électrique 4 directe sur le secteur, ce qui rend l'utilisation et la création basse tension d'alimentation inutile. En outre, l'alimentation électrique 4 est indépendante de l'alimentation électrique utilisée pour alimenter l'appareil électrique associé à un tel fil de transmission 2. Ce n'est pas le signal d'alimentation en puissance d'un moteur électrique ou d'éléments chauffants qui est altéré par la transmission d'informations.

Un avantage supplémentaire réside dans l'utilisation d'une alternance positive du signal électrique 10. En effet, un tel choix permet de se limiter à une seule référence de masse.

## Revendications

1. Procédé de transmission d'informations issues de capteurs de grandeurs physiques consistant :
- à transmettre au moins une information sur un seul fil de transmission (2), conducteur électrique,
- à utiliser un signal électrique (10) pour véhiculer les informations,
- à utiliser un circuit électrique ou électronique (1) pour générer un signal électrique transformé, véhiculant les informations,
- à utiliser des moyens de réception et d'analyse des informations transmises,
**caractérisé en ce qu'**il consiste, à partir de grandeurs physiques mesurées, par des capteurs sensibles à l'état de fonctionnement ou d'utilisation d'un appareil électrique, à tronquer temporellement, par l'intermédiaire du circuit électrique ou électronique (1), le signal électrique pour un temps donné correspondant au temps de blocage de moyens d'écrêtage présentant une tension seuil de blocage pour marquer ledit signal électrique d'au moins une information issue d'au moins un capteur.

2. Procédé selon la revendication 1 **caractérisé en ce qu'**il consiste à utiliser un signal alternatif sinusoïdal du secteur pour véhiculer de manière le troncage automatique les informations, le troncage pouvant s'effectuer sur l'alternance positive ou sur l'alternance négative dudit signal.

3. Procédé selon la revendication 2 **caractérisé en ce qu'**il consiste à différencier chaque information transmise par la durée du blocage de l'alternance.

4. Procédé selon la revendication 2 **caractérisé en ce qu'**il consiste :
- à utiliser l'alternance positive (11) du signal alternatif sinusoïdal du secteur pour véhiculer les informations.

5. Circuit électronique ou électrique (1) de transmission, susceptible d'être relié à un seul fil de transmission (2) d'informations conducteur électrique, à une alimentation électrique (4) fournissant un signal électrique (10) susceptible d'être transformé par le circuit électronique ou électrique (1) pour véhiculer des informations issues de capteurs de grandeurs physiques, ainsi qu'à des moyens de réception et d'analyse des informations transmises par l'intermédiaire du fil de transmission (2) **caractérisé en ce que** le circuit électronique (1) comporte des moyens pour tronquer temporellement le signal électrique, pour un temps donné correspondant au temps de blocage de moyens d'écrêtage présentant une tension seuil de blocage, pour marquer ledit signal électrique d'au moins une information issue d'au moins un capteur sensible au fonctionnement ou à l'utilisation d'un appareil électrique.

6. Circuit selon la revendication 5 **caractérisé en ce que** chaque information transmise par au moins un capteur correspond à un blocage du signal électrique d'une durée déterminée.

7. Circuit selon la revendication 5 ou 6 **caractérisé en ce qu'**il est alimenté par l'alimentation électrique (4) du secteur.

8. Circuit selon l'une des revendications 5 à 7 **caractérisé en ce qu'**il comporte au moins un interrupteur (S1, S2) piloté par un capteur de grandeurs physiques du type tout ou rien, associé à une diode zéner (D1, D2) branchée en parallèle sur ledit interrupteur (S1, S2) pour tronquer temporellement le signal électrique (10) avec l'ouverture dudit interrupteur (S1, S2).

9. Montage comprenant un circuit selon l'une des revendications 5 à 8 **caractérisé en ce qu'**il est relié électriquement par l'intermédiaire du fil de transmission (2) à des moyens de réception et d'analyse des informations transmises, de manière à optimiser le fonctionnement de l'appareil électrique, lesdits moyens de réception et d'analyse étant constitués d'un diviseur de tension (3) sur lequel est transmis le signal électrique marqué de la ou des informations issues des capteurs.

10. Circuit selon la revendication 5 **caractérisé en ce qu'**il comporte des moyens pour tronquer temporellement le signal électrique présentant une tension de coupure variable linéairement en fonction d'une variation de grandeurs physiques lues par un capteur.

11. Appareil électroménager comportant un circuit électronique ou électrique (1) conforme à l'une des revendications 5 à 10.

12. Appareil électroménager selon la revendication 11 **caractérisé en ce qu'**il est constitué d'un fer à repasser.

13. Appareil électroménager selon la revendication 11 **caractérisé en ce qu'**il est constitué d'un générateur de vapeur relié à un fer à repasser par l'intermédiaire d'un fil de transmission (2) d'informations.

## Claims

1. A method of transmitting information obtained from sensors of physical parameters by:
- transmitting information on a single electrically conductive transmission wire (2),
- using an electrical signal (10) to convey the information,
- using an electrical or electronic circuit (1) to generate a converted electrical signal conveying the information, and
- using means for receiving and analyzing the information transmitted,
**characterized in that** the method consists of, starting from physical parameters measured by sensors responsive to the state of operation or use of an electrical appliance, temporally truncating, by means of the electrical or electronic circuit (1), the electrical signal for a given time corresponding to the turn-off time of limiter means having a turn-off threshold voltage for marking said electrical signal with information from a sensor.

2. A method according to claim 1, **characterized in that** it consists of using a sinusoidal alternating current signal from the mains supply to convey the information automatically and the truncation can be applied to the positive half-wave or the negative half-wave of said signal.

3. A method according to claim 2, **characterized in that** it consists of distinguishing each kind of information transmitted by the time for which the half-wave is turned off.

4. A method according to claim 2, **characterized in that** it consists of using the positive half-wave (11) of the sinusoidal alternating current signal from the mains supply to convey the information.

5. An electronic or electrical transmission circuit (1) adapted to be connected to a single electrically conductive information transmission wire (2), an electrical power supply (4) supplying an electrical signal (10) that can be converted by the electronic or electrical circuit (1) to convey information from sensors of physical parameters, and means for receiving and analyzing information transmitted by the transmission wire (2), **characterized in that** the electronic circuit (1) includes means for temporally truncating the electrical signal for a given time corresponding to the turn-off time of limiter means having a turn-off threshold voltage, to mark said electrical signal with information from a sensor responsive to the operation or use of an electrical appliance.

6. A circuit according to claim 5, **characterized in that** each kind of information transmitted by a sensor corresponds to turning off the electrical signal for a particular time period.

7. A circuit according to claim 5 or claim 6, **characterized in that** it is supplied with power by the electrical power supply (4) from the mains supply.

8. A circuit according to any of claims 5 to 7, **characterized in that** it includes a switch (S1, S2) controlled by a binary sensor of physical parameters associated with a Zener diode (D1, D2) shunting said switch (S1, S2) to truncate the electrical signal (10) temporally with the opening of said switch (S1, S2).

9. A system including a circuit according to any of claims 5 to 8, **characterized in that** it is electrically connected by a transmission wire (2) to means for receiving and analyzing transmitted information so as to optimize the operation of the electrical appliance, said receiver and analyzer means consisting of a voltage divider (3) to which is transmitted the electrical signal marked by information from the sensors.

10. A circuit according to claim 5, **characterized in that** it includes means for temporally truncating the electrical signal having a cut-off voltage that varies linearly as a function of variation of physical parameters read by a sensor.

11. A domestic electrical appliance including an electronic or electrical circuit (1) according to any of claims 5 to 10.

12. A domestic electrical appliance according to claim 11, **characterized in that** it is a clothes iron.

13. A domestic electrical appliance according to claim 11, **characterized in that** it is a steam generator connected to a clothes iron by an information transmission wire (2).

## Patentansprüche

1. Verfahren zum Übertragen von Informationen, die von Sensoren für physikalische Größen stammen, das darin besteht:
- wenigstens eine Information auf einem einzigen elektrisch leitenden Übertragungsdraht (2) zu übertragen,
- ein elektrisches Signal (10) zum Befördern der Informationen zu verwenden,
- eine elektrische oder elektronische Schaltung (1) zum Erzeugen eines umgeformten elektrischen Signals zu verwenden, das die Informationen befördert,
- Mittel zum Empfang und zur Analyse der übertragenen Informationen zu verwenden,
**dadurch gekennzeichnet, daß** es darin besteht, ausgehend von physikalischen Größen, die von Sensoren gemessen sind, die für den Betriebs- oder Verwendungszustand eines Elektrogeräts empfindlich sind, über eine elektrische oder elektronische Schaltung (1) das elektrische Signal für eine gegebene Zeit zeitlich zu trunkieren, die der Sperrzeit von Kappungsmitteln mit einer Sperrschwellenspannung entspricht, um das elektrische Signal mit wenigstens einer Information zu markieren, die aus wenigstens einem Sensor stammt.

2. Verfahren nach Anspruch 1, **dadurch gekennzeichnet, daß** es darin besteht, ein sinusförmiges Wechselstromsignal des Netzes zu verwenden, um automatisch die Informationen zu befördern, wobei die Trunkierung an der positiven oder der negativen Halbperiode des Signals durchgeführt werden kann.

3. Verfahren nach Anspruch 2, **dadurch gekennzeichnet, daß** es darin besteht, jede übertragene Information durch die Dauer der Sperrung der Halbperiode zu differenzieren.

4. Verfahren nach Anspruch 2, **dadurch gekennzeichnet, daß** es darin besteht:
- die positive Halbperiode (11) des sinusförmigen Wechselstromsignals des Netzes zum Befördern der Informationen zu verwenden.

5. Elektronische oder elektrische Übertragungsschaltung (1), die mit einem einzigen, elektrisch leitenden Draht (2) zum Übertragen von Informationen verbunden werden kann, einer Stromversorgung (4), die ein elektrisches Signal (10) liefert, das von der elektronischen oder elektrischen Schaltung (1) umgeformt werden kann, um Informationen zu befördern, die aus Sensoren für physikalische Größen stammen, sowie mit Mitteln zum Empfang und zur Analyse der über den Übertragungsdraht (2) übertragenen Informationen,
**dadurch gekennzeichnet, daß** die elektronische Schaltung (1) Mittel aufweist, um das elektrische Signal für eine gegebene Zeit zeitlich zu trunkieren, die der Sperrzeit von Kappungsmitteln mit einer Sperrschwellenspannung entspricht, um das elektrische Signal mit wenigstens einer Information zu markieren, die aus wenigstens einem Sensor stammt, der für den Betrieb oder der Verwendung eines Elektrogeräts empfindlich ist.

6. Schaltung nach Anspruch 5, **dadurch gekennzeichnet, daß** jede von wenigstens einem Sensor übertragene Information einer Sperrung des elektrischen Signals mit einer bestimmten Dauer entspricht.

7. Schaltung nach Anspruch 5 oder 6, **dadurch gekennzeichnet, daß** sie von der Stromversorgung (4) des Netzes gespeist wird.

8. Schaltung nach einem der Ansprüche 5 bis 7, **dadurch gekennzeichnet, daß** sie wenigstens einen Schalter (S1, S2) aufweist, der von einem Sensor für physikalische Größen vom Typ alles oder nichts gesteuert wird und einer Zenerdiode (D1, D2) zugeordnet ist, die zu dem Schalter (S1, S2) parallelgeschaltet ist, um das elektrische Signal (10) beim Öffnen des Schalters (S1, S2) zeitlich zu trunkieren.

9. Anordnung mit einer Schaltung nach einem der Ansprüche 5 bis 8, **dadurch gekennzeichnet, daß** sie über den Übertragungsdraht (2) derart mit Mitteln zum Empfang und zur Analyse der übertragenen Informationen verbunden ist, daß der Betrieb des Elektrogeräts optimiert ist, wobei die Empfangs- und Analysemittel aus einem Spannungsteiler (3) bestehen, zu dem das elektrische Signal übertragen wird, das mit der oder den aus den Sensoren stammenden Informationen markiert ist.

10. Schaltung nach Anspruch 5, **dadurch gekennzeichnet, daß** sie Mittel zum zeitlichen Trunkieren des elektrischen Signals mit einer Unterbrechungsspannung aufweist, die in Abhängigkeit einer Veränderung von physikalischen Größen linear variabel ist, die von einem Sensor gelesen werden.

11. Haushaltsgerät, das eine elektronische oder Schaltung (1) nach einem der Ansprüche 5 bis 10 aufweist.

12. Haushaltsgerät nach Anspruch 11, **dadurch gekennzeichnet, daß** es aus einem Bügeleisen besteht.

13. Haushaltsgerät nach Anspruch 11, **dadurch gekennzeichnet, daß** es aus einem Dampfgenerator besteht, der über einen Übertragungsdraht (2) für Informationen mit einem Bügeleisen verbunden ist.
